(19) **Europäisches Patentamt / European Patent Office / Office européen des brevets**

(11) **EP 2 336 973 B1**

(12) **EUROPEAN PATENT SPECIFICATION**

(45) Date of publication and mention
of the grant of the patent:
**24.04.2013 Bulletin 2013/17**

(51) Int Cl.:
***G06T 7/20*** (2006.01)

(21) Application number: **10189552.2**

(22) Date of filing: **01.11.2010**

(54) **Motion estimation improvement method avoiding fake block matches**

Verfahren zur Verbesserung der Bewegungsschätzung zur Vermeidung falscher Blockübereinstimmungen

Procédé d'amélioration d'évaluation des mouvements permettant d'éviter les correspondances de blocs d'erreurs

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.11.2009 TR 200908439**

(43) Date of publication of application:
**22.06.2011 Bulletin 2011/25**

(73) Proprietor: **Vestel Elektronik Sanayi ve Ticaret A.S.**
**45030 Manisa (TR)**

(72) Inventors:
• **Gunyel, Bertan**
  **45030 Manisa (TR)**
• **Bastug, Ahmet**
  **45030 Manisa (TR)**

(74) Representative: **Cayli, Hülya**
**Paragon Consultancy Inc.**
**Koza Sokak No: 63/2**
**GOP**
**06540 Ankara (TR)**

(56) References cited:
**WO-A2-2007/020569     GB-A- 2 436 740**

• **SORWAR G ET AL: "FILTERING OF BLOCK MOTION VECTORS FOR USE IN MOTION-BASED VIDEO INDEXING AND RETRIEVAL", IEICE TRANSACTIONS ON FUNDAMENTALS OF ELECTRONICS,COMMUNICATIONS AND COMPUTER SCIENCES, ENGINEERING SCIENCES SOCIETY, TOKYO, JP, vol. E88-A, no. 10, 1 October 2005 (2005-10-01), pages 2593-2599, XP001234465,**
• **SU Y ET AL: "Global motion estimation from coarsely sampled motion vector field and the applications", IEEE TRANSACTIONS ON CIRCUITS AND SYSTEMS FOR VIDEO TECHNOLOGY, IEEE SERVICE CENTER, PISCATAWAY, NJ, US, vol. 15, no. 2, 1 February 2005 (2005-02-01), pages 232-241, XP002602162,**

**Description**

**Technical Field**

This invention relates to method for limiting the motion vector of the central search path in the reverse direction to the global motion of the scene.

**Prior Art**

Motion estimation techniques are widely used in video systems such as compression, motion tracing and video noise filtering. Motion estimation is usually the most intensive part of such a video system in terms of computational complexity. Hence, various fast block matching techniques are developed, which enable fast estimation of motion by decreasing the total number of operations under the condition of tolerant error. Most of the fast block matching techniques utilize a search pattern traversed in a search range to limit the number of operations. Some examples of block motion estimation methods utilizing search pattern are three-step search, diamond search, cross diamond search, hexagonal search and multi-path techniques.

The one example of the block motion estimation method is the three-step search strategy. According to method by T. Koga (T. Koga, K. Linuma, A. Hirano, Y. Lijima, and T. Ishiguro, "Motion Compensated Interframe Coding for Video Conferencing", Proc. Nat. Telecommun. Conf., New Orleans, LA, Nov. 29-Dec. 3 1981, pp.G5.3.1-5.3.5), in the three-step strategy, pixel difference metric (PDM) is computed at the center point and the additional eight points which are four units away from the center point. The point with the minimum PDM is chosen to be the center for the next step in which the PDM values are computed for the additional eight neighbor points which are two units away from the center point. In the final step, the point having the minimum PDM in the previous step is taken to be the center for the search. The PDM is computed for the center and the additional eight neighbor points which are one unit away. Then, the point having the minimum PDM is chosen to be the match.

The second example of the search method is the diamond search strategy. According to method by S. Zhu (S. Zhu and K. Ma, "A New Diamond Search Algorithm for Fast Block-Matching Motion Estimation", IEEE Trans., Image Processing, vol. 9, no. 2, pp. 287-290, February 2000), the diamond search strategy utilizes two diamond shaped search patterns namely, large diamond and small diamond, having nine and five checking points, respectively. According to this document, firstly, the large diamond search pattern (LDSP) is applied to the check points and PDM values are computed for these points. At each step, it is controlled whether the candidate having the minimum PDM is the center point. Then, if the point with the minimum PDM value is not the center point, the large diamond pattern is located around the point having the minimum PDM value and the next step is processed. If the point with the minimum pixel difference value is the center point, the small diamond search pattern (SDSP) is located around the center point. At this step, the PDM is computed for the five candidate points and the point giving the minimum pixel difference value is assigned to be the match.

The other search method for block motion estimation is the cross diamond search method. According to the cross diamond search method by C. H. Cheung (C. H. Cheung and L. M. Po, "A Novel Cross Diamond Search Algorithm for Fast Block Motion Estimation", IEEE Trans., Circuits and Syst. Video Technol., vol. 12, no. 12, pp.1168-1177, December 2002), this method utilizes a cross shaped search pattern (CSSP) computing PDM for nine candidates including the center candidate. If the center candidate has the minimum PDM value, then the search stops. If not, two additional search points, which are the closest points of the central LDSP to the point giving the minimum PDM in the previous step, are checked. If the point giving the minimum PDM value is the same point of the previous step, that point is assigned as the match. If not, regular diamond search procedure is applied by locating the LDSP at the point giving the minimum PDM value at the previous step.

The next method is the hexagonal search strategy for block motion estimation, According to method for hexagonal-based search pattern for fast block motion estimation by C. Zhu (C. Zhu, X. Lin and L. P. Chau, "Hexagonal-Based Search Pattern for Fast Block Motion Estimation", IEEE Trans., Circuits and Syst. Video Technol., vol. 12, no. 5, pp. 349-355, May 2002), in this method, two search patterns, which are the hexagonal search pattern checking seven control points and the rectangular search pattern checking nine control points, are utilized. The hexagonal search pattern is applied to the seven candidates around the start point of the search procedure and the PDM values are computed. If the point with the minimum PDM value is the center candidate, the rectangular search pattern is applied and the nine candidates are checked. The point giving the minimum PDM is assigned to be the match. If the candidate giving the minimum PDM value with the hexagonal pattern is not the central one, the hexagonal search pattern is located around the minimum PDM candidate and it is applied continuously until the minimum PDM point is found at the central location.

Although the fast block matching techniques provide the estimation of motion with less number of operations, they usually suffer from being unable to estimate the true motion. One of the major reasons for such a wrong estimation of motion is the incorrect estimation of starting path at the beginning of the search procedure. Searching for the minimum point in a wrong direction may result in totally diverse motion vectors than the true motion vector. One other reason can be stated as being trapped into local minima points. A local minimum point may prevent the search procedure to reach the global minimum and hence the true motion vector, even when the initial search direction is estimated in a correct way.

In the article titled "Filtering of block motion vectors for use in motion-based video indexing and retrieval" belongs to Sorwar G et al, it is mentioned that true object motions can be obtained by global motion estimation when there exist both local motion and global motion in a video sequences. Since in the video sequences, most moving objects generally occupy more than neighboring macroblock, it can be assumed that true object motion vectors always occur in a clustered form and false motion vectors tend to appear as impulsive noise. For that reason, a noise tolerance threshold is defined and the true object motions are decided based on that threshold value. However, this approach performs well if the true and false motions vectors have different lengths. Thus, in said article, a strategy for removing these false vectors is disclosed. In that strategy, gradually increasing the length of the true motion vector with a higher ratio compared to the increasing ratio of the length of the false motion vector is provided. Therefore at the end, the true motion vector length becomes greater than the false vector and a predefined threshold is able to be used for separating them to each other. For that purpose, since true motion vectors frequently occur in a clustered form and false vectors occur as impulsive noise, accumulation of the mean vector length, in addition to the original vector length is utilized. Then, in said article, a mean accumulative threshold filter is formulated for false motion vector elimination process.

In the patent document with publication number US 2007/0196018 A1, method of multi-path block matching computing for image processing is disclosed. Multi-path techniques are used for solving the problems of wrong estimation of the initial search direction and being trapped into local minima points. In multi-path techniques, search procedure is applied in parallel starting from different points and multiple motion vectors are obtained for each block of pixels. After the parallel search tracks are complete, one of the motion vectors is chosen according to some metric. Nevertheless, the determination of the winner path according to some metric may lead to wrong decisions although the winner path candidate gives better metric performance than the other path(s). Such a situation may be observed when there is a strong global motion in the scene. One or more of the search paths may estimate motion vectors which are inconsistent with the global motion of the scene by being trapped into local minima points; for example, fake matches which have very little probability of existence in real life situations.

Moreover, the core idea of the present method is limiting the motion vector of the central search path in the reverse direction to the global motion of the scene. Central search path is the search trajectory which starts seeking the match of a particular block in the reference frame from the frame coordinates of the block center in the search frame. When the motion vector of the central search path is found to be pointing towards the opposite direction of the global motion of the scene by amplitude larger than an allowed threshold decided by taking into account the amplitude of the global motion and so it is limited. Therefore, the present method avoids unexpected block matches.

### Objective of the Invention

The aim of the present invention is to find the correct motion estimation by limiting the motion vectors.

Another aim of the present invention is to improve the motion estimation method avoiding unexpected block matches.

### Brief Description of the Drawings

The invention is illustrated in the appended figures, in which;

Figure - 1 shows general motion estimation scheme with feedback of global motion.
Figure - 2 shows a problematic situation without the present invention.
Figure - 3 shows internal diagram of the motion estimation block.

The parts in the figures are given reference numbers and these numbers are described below.

Objects in the first frame    (a1), (a2), (a3)
Objects in the second frame   (b1), (b2), (b3), (b4)

### Detailed Disclosure of the Invention

Present invention comprises a solution to the problem of wrong motion estimation by limiting the motion vectors that are inconsistent with the global motion of the scene. The main principle of this invention is to limit the estimated motion vectors according to a threshold determined in conjunction with the global motion of the scene. The general motion estimation scheme is shown in Figure - 1. The global motion estimation for the whole frame is also considered for the estimation of the motion vector for any block.

In the Figure - 2, a problematic situation for motion estimation is shown. Suppose that the actual matches of the objects in the first frame (a1, a2, a3) be the objects (b1, b2, b3) respectively in the second frame. Considering the actual matches, there is a global motion in positive x direction, since this global motion estimate must be supplied to the motion estimation module. Additionally, suppose the object (b4) in the second frame be an aperture object, that is, an object which newly enters the scene. When the motion estimation algorithm is searching for the match of the object (a3) in the second frame, it may somehow (if the search range is sufficiently large) label the object (b4) as the match of the object (a3) although the real matching is the object (a3) to the object (b3). This matching may be acceptable in terms of minimizing the pixel difference metric (PDM) or maximizing the peak signal - to - noise ratio (PSNR) value between the actual and the motion compensated frames. However, for applications where estimating the true motion is more important than such metrics, such a matching may lead to erroneous results. Since the consistency of the neighboring blocks is an important aspect for true motion applications, such a wrong motion vector may result in wrong modifications of the motion vectors of the neighboring blocks during the post processing steps for the motion vector field even when they are truly estimated.

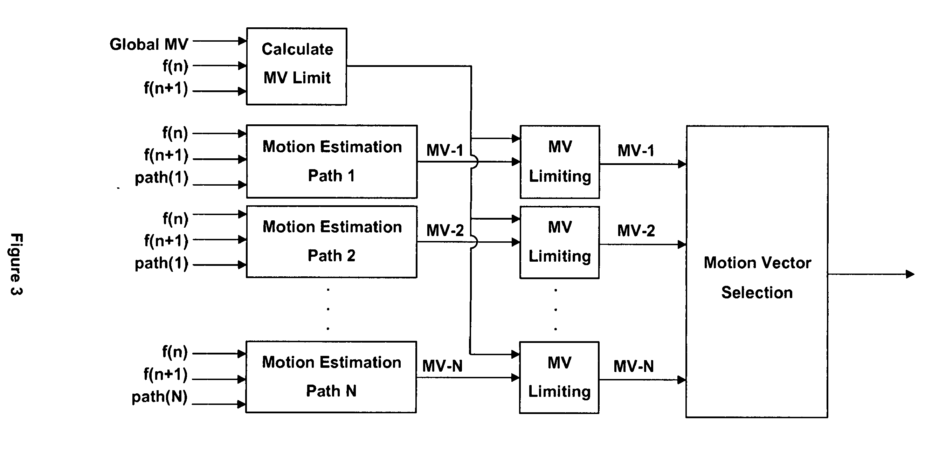

Present invention comprises for limiting the motion vector found in the reverse direction of the global motion vector according to thresholds for the x and y components. The internal block diagram of the motion estimation procedure with the present invention added is shown in Figure 3.

The first step of this method is the motion vector limit calculator (MVLC) unit which calculates the thresholds for the x and y components of the motion vectors according to the global motion vector supplied to the module. Then, motion vector limits are found as follows:

$$
\begin{aligned}
&For\ GMV_x \geq 0, \\
&L_x = \begin{cases} -K_x & , if\ GMV_x - \lambda K_x \rangle -K_x \\ GMV_x - \lambda K_x & ,else \end{cases} \\
&For\ GMV_x \langle 0, \\
&L_x = \begin{cases} K_x & ,if\ GMV_x + \lambda K_x \langle K_x \\ GMV_x + \lambda K_x & ,else \end{cases}
\end{aligned}
\tag{1}
$$

$$
\begin{aligned}
&For\ GMV_y \geq 0, \\
&L_y = \begin{cases} -K_y & , if\ GMV_y - \lambda K_y \rangle -K_y \\ GMV_y - \lambda K_y & ,else \end{cases} \\
&For\ GMV_y \langle 0, \\
&L_y = \begin{cases} K_y & ,if\ GMV_y + \lambda K_y \langle K_y \\ GMV_y + \lambda K_y & ,else \end{cases}
\end{aligned}
\tag{2}
$$

The x and y components of the motion vector limits and the global motion vector are denoted by $L_x$, $L_y$ and $GMV_x$, $GMV_y$, respectively. In addition, $K_x$, $K_y$ and $\lambda$ denote the components base limits which are predetermined threshold and a scaling constant, respectively.

The parameters $\lambda$, $K_x$, $K_y$ are design parameters to be determined as constants. However, there are constraints on these design parameters.

$$\lambda \rangle 1$$
$$K_x \rangle 0 \qquad (3)$$
$$K_y \rangle 0$$

Considering the equations determining the motion vector limit for the x component (1) in an intuitive manner, these equations can be written in the following form.

$$For \ GMV_x \geq 0,$$
$$L_x = \begin{cases} -K_x & , if \ GMV_x \rangle (\lambda -1)K_x \\ GMV_x - \lambda K_x & ,else \end{cases}$$
$$For \ GMV_x \langle 0, \qquad (4)$$
$$L_x = \begin{cases} K_x & ,if \ GMV_x \langle (1-\lambda)K_x \\ GMV_x + \lambda K_x & ,else \end{cases}$$

There are two basic cases. In the first case, the global motion vector is strong in the positive direction, and

- if the x component of the global motion vector is positive and larger than the predetermined threshold, the motion vector limit is set in a tighter manner the negative direction since proportion of negative valued vectors with small absolute magnitude are allowed;

- if the x component of the global motion vector is smaller than the predetermined threshold, then this means it is not very strong in the positive direction. In this case, the motion vector limit in the negative direction is set to a looser value since more negative motion vectors are allowed.

And the y component of the global motion vector limit is obtained by the similar procedure which has only one difference from the above mentioned procedure by using the y component of the global motion vector and the y component of base limit instead of the x component. Also, similar arguments can be made about the case where the x component of the global motion vector is negative and also for the y component of the global motion vector.

These said thresholds are used to limit the motion vectors which are found in each path in a multipath motion estimation module. For each path, if any component of the estimated motion vector has the same sign with the corresponding limit ($L_x$ or $L_y$) and has a greater absolute value, then the corresponding component of the motion vector is directly set to the corresponding limit ($L_x$ and $L_y$).

The core idea of the method in the present invention is that; the central search path is the search trajectory which starts seeking the match of a particular block in the reference frame from the frame coordinates of the block center in the search frame. When the motion vector of the central search path is found to be pointing towards the opposite direction of the global motion of the scene by amplitude larger than an allowed threshold decided by taking into account the amplitude of the global motion, it is limited. By this way, unexpected block matches are avoided.

**Claims**

1. A motion estimation improvement method avoiding fake block matches, **characterized in that** it further contains the steps of;

    • calculating thresholds for the x and y components of the motion vectors,
    • obtaining the x and y components of the motion vector limits ($L_x$ and $L_y$) according to the said thresholds, and
    • limiting the motion vectors in the reverse direction of the global motion vector according to thresholds such that the corresponding x and y components of the motion vector are set directly to the corresponding limits ($L_x$ and $L_y$) if any component of the estimated motion vector has the same sign with the corresponding limit ($L_x$ or

$L_y$) and has a greater absolute value.

2. A method according to claim 1 **characterized in that**, the x and y components of the motion vector limits are found according to the following conditional equation:

$$For\ GMV_x \geq 0, GMV_y \geq 0$$

$$L_{x.y} = \begin{cases} -K_{x.y} & , if\ GMV_{x.y} \rangle (\lambda - 1)K_{x.y} \\ GMV_{x.y} - \lambda K_{x.y} & , else \end{cases}$$

$$For\ GMV_{x.y} \langle 0,$$

$$L_{x.y} = \begin{cases} K_{x.y} & , if\ GMV_{x.y} \langle (1-\lambda)K_{x.y} \\ GMV_{x.y} + \lambda K_{x.y} & , else \end{cases}$$

, respectively, wherein $L_x$, $L_y$ represent the x and y components of the motion vector limits; $GMV_x$, $GMV_y$ represent the x and y components of the global motion vector; $K_x$, $K_y$ represent the x and y components base limits which are predetermined threshold and $\lambda$ denote a scaling constant.

3. A method according to claim 2, wherein the parameters $\lambda$, $K_x$, $K_y$ may take values such that;

$$\lambda \rangle 1$$

$$K_x \rangle 0$$

$$K_y \rangle 0$$

4. A method according to claim 1,2 and 3, the global motion vector ($GMV_x$) is positive and larger than the predetermined threshold, the motion vector limit ($L_x$) is set in the negative direction since proportion of negative valued vectors with small absolute magnitude are allowed.

5. A method according to Claim 1,2 or 3, if the x component of the global motion vector ($GMV_x$) is smaller than the predetermined threshold, then this means it is not very strong in the positive direction.

6. A method according to Claim 1 and 2, wherein the y component of the global motion vector limit is obtained by the similar procedure.


**Patentansprüche**

1. Verfahren zur Verbesserung der Bewegungsschätzung zur Vermeidung falscher Blockübereinstimmungen, **dadurch gekennzeichnet, dass** es des Weiteren die folgenden Schritte enthält:

- Berechnen von Durchschnittswerten für die x- und y-Komponenten der Bewegungsvektoren,
- Erhalten der x- und y-Komponenten der Bewegungsvektorgrenzen ($L_x$ und $L_y$) gemäß diesen Durchschnittswerten und
- Beschränken der Bewegungsvektoren in der umgekehrten Richtung des globalen Bewegungsvektors gemäß Durchschnittswerten, sodass die entsprechenden x- und y-Komponenten des Bewegungsvektors direkt auf die

entsprechenden Grenzen (L$_x$ und L$_y$) gesetzt werden, wenn eine Komponente des geschätzten Bewegungsvektors das gleiche Vorzeichen wie die entsprechende Grenze (L$_x$ oder L$_y$) und einen größeren Absolutwert besitzt.

2. Verfahren nach Anspruch 1, **dadurch gekennzeichnet, dass** die x- und y-Komponenten der Bewegungsvektorgrenzen gemäß der folgenden Bestimmungsgleichung ermittelt werden:

$$\textit{Für } GMV_x \geq 0, GMV_y \geq 0$$

$$L_{x,y} = \begin{cases} -K_{x,y} & \textit{, falls } GMV_{x,y} \rangle (\lambda - 1)K_{x,y} \\ GMV_{x,y} - \lambda K_{x,y} & \textit{, sonst} \end{cases}$$

$$\textit{Für } GMV_{x,y} \langle 0,$$

$$L_{x,y} = \begin{cases} K_{x,y} & \textit{, falls } GMV_{x,y} \langle (1-\lambda)K_{x,y} \\ GMV_{x,y} + \lambda K_{x,y} & \textit{, sonst} \end{cases}$$

, wobei L$_x$, L$_y$ die x- und y-Komponenten der Bewegungsvektorgrenzen darstellen; GMV$_x$, GMV$_y$ die x- und y-Komponenten des globalen Bewegungsvektors darstellen; K$_x$, K$_y$ die x- und y-Komponenten-Basisgrenzen darstellen, die ein vorbestimmter Durchschnittswert sind, und λ eine Skalierungskonstante bezeichnet.

3. Verfahren nach Anspruch 2, **dadurch gekennzeichnet, dass** die Parameter λ, K$_x$, K$_y$ Werte annehmen können, sodass

$$\lambda \rangle 1$$

$$K_x \rangle 0$$

$$K_y \rangle 0$$

ist.

4. Verfahren nach Anspruch 1, 2 und 3, wobei der globale Bewegungsvektor (GMV$_x$) positiv und größer als der festgestellte Durchschnittswert ist, die Bewegungsvektorgrenze (L$_x$) in die negative Richtung gesetzt wird, da eine Proportion negativ gewerteter Vektoren mit kleiner absoluter Magnitude erlaubt ist.

5. Verfahren nach Anspruch 1, 2 oder 3, wobei, falls die x-Komponente des globalen Bewegungsvektors (GMV$_x$) kleiner ist als der vorbestimmte Durchschnittswert, das bedeutet, dass dieser in die positive Richtung nicht sehr stark ist.

6. Verfahren nach Anspruch 1 und 2, **dadurch gekennzeichnet, dass** die y-Komponente der globalen Bewegungsvektorgrenze durch ein ähnliches Verfahren erhalten wird.

**Revendications**

1. Procédé d'amélioration d'estimation de mouvement évitant des fausses correspondances de bloc, **caractérisé en ce qu'**il comprend en outre les étapes consistant à ;

- calculer des seuils pour les composantes x et y des vecteurs de mouvement,
- obtenir les composantes x et y des limites de vecteur de mouvement ($L_x$ et $L_y$) selon lesdits seuils, et
- limiter les vecteurs de mouvement dans la direction inverse du vecteur de mouvement global selon des seuils de sorte que les composantes x et y correspondantes du vecteur de mouvement sont établies directement aux limites correspondantes ($L_x$ et $L_y$) si une composante quelconque du vecteur de mouvement estimé a le même signe avec la limite correspondante ($L_x$ ou $L_y$) et a une valeur absolue supérieure.

2. Procédé selon la revendication 1, **caractérisé en ce que**, les composantes x et y des limites de vecteur de mouvement sont trouvées selon les équations conditionnelles suivantes :

$$\text{Pour } GMV_x \geq 0, GMV_y \geq 0$$

$$L_{x,y} = \begin{cases} -K_{x,y} & , si\, GMV_{x,y} \rangle (\lambda - 1)K_{x,y} \\ GMV_{x,y} - \lambda K_{x,y} & , sinon \end{cases}$$

$$\text{Pour } GMV_{x,y} \langle 0,$$

$$L_{x,y} = \begin{cases} K_{x,y} & , si\, GMV_{x,y} \langle (1 - \lambda)K_{x,y} \\ GMV_{x,y} + \lambda K_{x,y} & , sinon \end{cases}$$

,

respectivement, dans lesquelles $L_x$, $L_y$ représentent les composantes x et y des limites de vecteur de mouvement ; $GMV_x$, $GMV_y$ représentent les composantes x et y du vecteur de mouvement global ; $K_x$, $K_y$ représentent les limites de base des composantes x et y qui sont des seuils prédéterminés et $\lambda$ indique une constante de mise à l'échelle.

3. Procédé selon la revendication 2, dans lequel les paramètres $\lambda$, $K_x$, $K_y$ peuvent prendre des valeurs telles que ;

$$\lambda > 1$$

$$K_x > 0$$

$$K_y > 0$$

4. Procédé selon les revendications 1, 2 et 3, dans lequel le vecteur de mouvement global ($GMV_x$) est positif et plus grand que le seuil prédéterminé, la limite de vecteur de mouvement ($L_x$) est établie dans la direction négative puisqu'une proportion de vecteurs à valeur négative ayant une petite grandeur absolue est autorisée.

5. Procédé selon la revendication 1, 2 ou 3, dans lequel si la composante x du vecteur de mouvement global ($GMV_x$) est plus petite que le seuil prédéterminé, alors cela signifie qu'elle n'est pas très forte dans la direction positive.

6. Procédé selon les revendications 1 et 2, dans lequel la composante y du vecteur de mouvement global est obtenue par la procédure similaire.

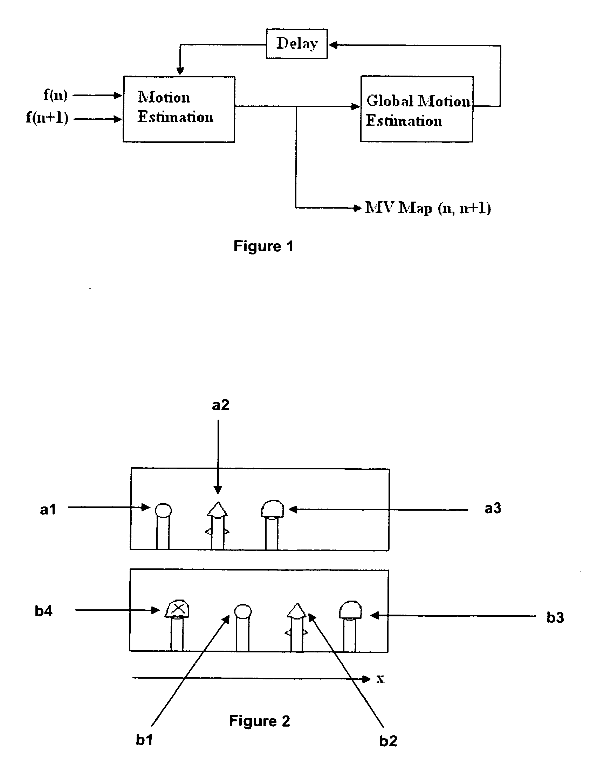

**Figure 1**

**Figure 2**

Figure 3

10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20070196018 A1

**Non-patent literature cited in the description**

- **T. KOGA ; K. LINUMA ; A. HIRANO ; Y. LIJIMA ; T. ISHIGURO.** Motion Compensated Interframe Coding for Video Conferencing. *Proc. Nat. Telecommun. Conf., New Orleans,* 29 November 1981, G5.3.1-5.3.5
- **S. ZHU ; K. MA.** A New Diamond Search Algorithm for Fast Block-Matching Motion Estimation. *IEEE Trans., Image Processing,* February 2000, vol. 9 (2), 287-290
- **C. H. CHEUNG ; L. M. PO.** A Novel Cross Diamond Search Algorithm for Fast Block Motion Estimation. *IEEE Trans., Circuits and Syst. Video Technol.,* December 2002, vol. 12 (12), 1168-1177
- **C. ZHU ; X. LIN ; L. P. CHAU.** Hexagonal-Based Search Pattern for Fast Block Motion Estimation. *IEEE Trans., Circuits and Syst. Video Technol.,* May 2002, vol. 12 (5), 349-355